(19) Europäisches Patentamt

European Patent Office

Office européen des brevets

(11) **EP 1 318 011 B1**

(12) **EUROPEAN PATENT SPECIFICATION**

(45) Date of publication and mention
of the grant of the patent:
**22.09.2004 Bulletin 2004/39**

(51) Int Cl.⁷: **B32B 27/32**, B32B 27/40

(21) Application number: **01204788.2**

(22) Date of filing: **07.12.2001**

(54) **Multi-layer sheet comprising a protective polyurethane layer**

Mehrschichtige Folie, die eine Polyurethanschutzschicht enthält

Feuille multicouche comprenant une couche protectrice de polyuréthane

(84) Designated Contracting States:
**AT BE CH CY DE DK ES FI FR GB GR IE IT LI LU MC NL PT SE TR**

(43) Date of publication of application:
**11.06.2003 Bulletin 2003/24**

(73) Proprietor: **3M Innovative Properties Company St. Paul, Minnesota 55133-3427 (US)**

(72) Inventor: **Fuchs, Iris**
**B1831 Diegem (BE)**

(74) Representative: **Voortmans, Gilbert J.L. et al**
**3M Europe S.A./N.V.**
**Hermeslaan 7**
**1831 Diegem (BE)**

(56) References cited:
**EP-A- 0 416 765          EP-A- 1 004 608**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

1. Field of the invention.

The invention relates to a pressure sensitive adhesive coated multi-layer sheet for use as a decorative and protective film on a door or window post of a vehicle. The invention also concerns a vehicle bearing the multi-layer sheet as well as a method for making the multi-layer sheet. '

2. Background of the invention.

Adhesive-coated films for use in the automotive industry are well known and have become more frequently employed in recent years to provide added functional and decorative features on the exterior surfaces of vehicles. For example in EP 1 004 608, there is disclosed a multi-layer protective adhesive sheet. The sheet is typically adhered to relatively flat portions of car bodies such as flat bumper surfaces and flat side panels of the car body in low-lying areas where stone chips to the paint are prevalent. The sheet is taught to protect the particular parts of the car body to which it is adhered.

On the other hand, the automotive industry also desires decorative films such as colored films that match or harmonize with vehicle paint colors and provide various aesthetic effects. For example, decorative films are typically desired for adhering to posts between the front and rear doors of a car. Unfortunately, adhesion of decorative and/or functional films to such areas has been problematic in that films when adhered to these posts, commonly known as B-pillars, may lift prematurely.

It would thus be desirable to provide an adhesive-coated film which is capable of remaining adhered to a vehicle body post without separating, lifting or flagging even after longer time periods and under the influence of natural weathering and automated vehicle washing cycles, while at the same time retaining a uniform and aesthetic appearance free of scratches. Desirably, such a film will also have good solvent resistance, weatherability and/or abrasion resistance.

3. Summary of the invention.

The invention comprises, in a first aspect, a multi-layer sheet for use as a decorative protective film on a door or window post of a vehicle. The multi-layer sheet comprises (i) a polymeric film having a thickness of not more than 150 μm and that is formed from an ionomer of an olefin-viny carboxylic acid copolymer, (ii) on a first side of the polymeric film a cross-linked polyurethane layer comprising the crosslinking reaction product of a polyurethane containing acid groups and a crosslinker and (iii) on a second side of the polymeric film opposite to the first side, an adhesive layer.

The multi-layer sheet of the present invention has good abrasion and scratch resistance, high solvent and weathering resistance. In particular, the multi-layer sheet has the ability to be wrapped around door or window posts in vehicle applications and remain adhered without lifting over long periods of time. Advantageously, the multi-layer sheet can also be provided with a pigmented and, if desired, a matte surface to improve the appearance of the door or window post. Thus, the multi-layer sheet of the invention can be used as a decorative film on car bodies.

The invention also encompasses a motor vehicle, in particular a car, a bus or a truck, having a multi-layer sheet attached to a door post or window post.

Thirdly, the present invention also provides a method of making a multi-layer sheet comprising the steps of:

(a) providing a polymeric film having a thickness of not more than μm and formed from an ionomer of an olefin-vinyl carboxylic acid copolymer;
(b) applying to a first side of said polymeric film a composition comprising a polyurethane containing acid groups and a crosslinker;
(c) applying to a second side of said polymeric film opposite to said first side, an adhesive layer; and
(d) causing cross-linking of the polyurethane layer.

2. Detailed description of the invention.

The multi-layer sheet of the present invention comprises a polymeric film having a thickness of not more than 150 μm, preferably not more than 130 μm and formed from an ionomer of olefin--vinyl carboxylic acid copolymers. Preferred ionomer of olefin-vinyl carboxylic acid copolymers are ethylene-acrylic acid and ethylene-methacrylic acid copolymers combined with various metal cations including cations of lithium, sodium, potassium, zinc, aluminum and calcium Suitable commercial ionomer resins include the Surlyn™ family of materials available from E.I. DuPont de Nemours & Co. Typically, the polymeric film will have a thickness between 50 μm and 150 μm, preferably between 70

μm and 120 μm.

Polymeric films formed from ionomers of olefin/vinyl carboxylate copolymers have excellent optical characteristics, high flexibility, good heat resistance and desired shrinkage behavior. Combined with the polyurethane, a multilayer sheet results that has excellent protective properties for use in exterior applications on a motor vehicle body.

The cross-linked polyurethane layer of the multi-layer sheet comprises a major amount of a cross-linked polyurethane derived from the reaction of a polyurethane containing acid groups and a crosslinker which is generally capable of reacting with the acid groups of the polyurethane to provide a cross-linked three dimensional network.

The polyurethane of the cross-linked polyurethane layer may be a polycarbonate, a polyester or a polyether based polyurethane. The polyurethane layer is preferably formed from an aqueous borne composition although solvent borne compositions are contemplated as well. Polycarbonate polyurethanes are generally preferred in the present invention and comprise the reaction product of a polycarbonate polyol or a polycarbonate polyamine arid an aliphatic polyisocyanate, preferably an aliphatic diisocyanate. Preferably, the polycarbonate based polyurethane has an acid number of at least 15 mg KOH/g and more preferably at least 18 mg KOH/g. The polycarbonate based polyurethane of the polyurethane layer preferably also has a Koenig hardness of at least 150 seconds, preferably at least 175 seconds and more preferably at least 200 seconds.

Aqueous borne dispersions of polycarbonate based polyurethanes and their method of preparation are well-known in the art and have been described in for example GB1549458 and GB 1549459. Polycarbonate based polyurethanes for use in connection with the present invention are commercially available and include for example NEOREZ™ R-986 and NEOREZ™ R-985 available Avecia, Waalwijk, Netherlands and ALBERDINGK™ U 911 available from Aberdingk Boley GmbH, Krefeld, Germany.

Polyurethanes that are formed from a condensation of a polyisocyanate, particularly an aliphatic polyisocyanate such as an aliphatic diisocyanate and a polyester diol, polyester diamine, a polyether diol or a polyether diamine may also be used. Such polyurethanes are described in for example US 5,532,058. A commercially available polyether polyurethane bearing acid groups includes ALBERDINGK™ U 600 A available from Aberdingk-Boley GmbH, Krefeld, Germany. A commercially available polyester based polyurethane includes NEOREZ™ R960 available Avecia, Waalwijk, Netherlands.

The polyurethane layer of the multi-layer sheet may comprise a blend of different polyurethanes such as for example a blend of polyurethanes based on polyether or polyester polyols with polycarbonate based polyurethanes. Generally, it will be preferred to use a polyurethane layer that is formed from a major part of polycarbonate based polyurethane, for example at least 60% by weight. In accordance with the present invention, "major part" means at least 60% by weight.

The polyurethane is cross-linked with a suitable cross-linker that readily reacts with the acid groups of the polyurethane. Preferably, the cross-linker allows for curing at a temperature below 100°C. Examples of cross-linkers that can be used to cross-link the polyurethane include melamines such as e.g. Cymel™ 303, Cymel™ 373 available from Cyanamide company, ureas, benzoguanamines such as Cymel™ 1123 glycolurils such as Cymel™ 1172 and multifunctional carbodiimides such as UCARLINK™ XL 29 SE available from Eurochem. A particularly preferred class of cross-linkers for use in this invention are the polyfunctional aziridines. Examples of suitable polyfunctional aziridines include those disclosed in US 3,225,013. Preferably, the polyfunctional aziridine is a trifunctional aziridine. Particular examples are trimethylol propane tris[3-aziridinyl propionate]; trimethylol propane tris[3(2-methyl-aziridinyl)-propionate]; trimethylol propane tris[2-aziridinyl butyrate]; tris(1-aziridinyl)phosphine oxide; tris(2-methyl-1-aziridinyl)phosphine oxide; pentaerythritol tris-3-(1-aziridinyl propionate); and pentaerythritol tetrakis-3-(1-aziridinyl propionate). Commercially available polyfunctional aziridines include those available under the trade designations "XAMA-2" (trimethylolpropane-tris-(.beta.-(N-aziridinyl)propionate) and "XAMA-7" (pentaerythritol-tris-(.beta.-(N-aziridinyl)propionate) from B.F. Goodrich Chemical Co., Cleveland, Ohio., and "NeoCryl CX-100" from Zeneca Resins, Wilmington, Mass..

The cross-linker will generally be used in an amount of 5 parts by weight to 15 parts by weight for 100 parts by weight of the polyurethane.

The polyurethane layer may contain further components conventionally employed in protective coatings such as for example an anti-oxidant or an ultraviolet radiation stabilizer. For example, the polyurethane layer of the multi-layer sheet can be pigmented if a particular tinting of the multi-layer sheet is desired. Particularly preferred coloring pigments are dye pigments and most preferably aqueous borne dye pigments. Dye pigments suitable for the addition to the polyurethane layer may be in the form of a paste that comprises the dye pigment mixed with a water soluble or water dispersible binder. Commercially available dye pigments that can be used in the polyurethane layer of this invention include Isoversal™ WL available from ISL Chemie GmbH and the dye pigments available from BASF under the trade name Luconyl™. Typically, dye pigments can be added to the polyurethane layer in an amount of 0.5 phr (parts per hundred) up to 10 phr without reducing the beneficial properties of the polyurethane layer to an unacceptable level.

Matting agents may also be employed in the polyurethane coating composition so as to provide a matting agent in the polyurethane layer, thereby providing a matte or non-glossy appearance to the polyurethane surface of the multi-layer sheet. Additionally, it was found that matting agents could also improve the abrasion resistance of the multi-layer film

Matting agents for use with this invention include inorganic and organic particulate materials having a particle size of less than about 30 µm, preferably less than about 10 µm. The matting agent serves to scatter incidental light when it is reflected from a surface. Inorganic matting agents include but are not limited to calcium carbonate; siliceous compounds such as silicon dioxide, aluminum silicate and magnesium silicate; clay; talc; diatomaceous earth; alumina; zinc oxide; calcium sulfate and barium sulfate. Organic matting agents include but are not limited to synthetic polymers such as polymethylmethacrylate; polytetrafluoroethylene; microfine waxes based on polyethylene, polypropylene and polyamides, and natural product polymers in particulate forms such as cellulose and starches. In the present invention, preferred matting agents comprise particles of siliceous compounds such as silicas and silicates.

The amount of the matting agent included in the polyurethane composition directly influences the appearance of the finished coating in that the more matting agent produces an increasing matte effect. The matting agent is generally used in an amount between 0.1% by weight and 15% by weight based on solids. A preferred range is 0.5% by weight to 10% by weight based on the solids of the coating composition for forming the polyurethane layer.

The multi-layer sheet further comprises an adhesive layer on the major side of the polymeric film opposite to the major side of the polymeric film carrying the polyurethane layer. The adhesive layer is generally protected by a conventional release liner. A suitable adhesive layer for use in this embodiment preferably includes a normally tacky pressure sensitive adhesive. The latter is being preferred in the present invention. Particularly suitable pressure sensitive adhesives are, for example, based on polyacrylates, synthetic and natural rubbers, polybutadiene and copolymers or polyisoprenes and copolymers. Silicone based adhesives such as polydimethylsiloxane and polymethylphenylsiloxane may also be used. Particularly preferred pressure sensitive adhesives for use in this invention are polyacrylate-based adhesives because they provide such properties as high clarity, UV-stability and aging resistance. Polyacrylate adhesives that can be used in this invention include, for example, those described in US 4 418 120; US Re 24,906 (Ulrich), US 4 619 867; US 4 835 217 and WO 87/00189. Preferably, the polyacrylate pressure sensitive adhesive comprises a cross-linked copolymer of a $C_4$-$C_{12}$ alkylacrylate and an acrylic acid. The polyacrylate pressure sensitive adhesive preferably also comprises a tackifier such as rosin ester. Adhesives useful in the invention may incorporate additives such as ground glass, titanium dioxide, silica, glass beads, waxes, tackifiers, low molecular weight thermoplastics, oligomeric species, plasticizers, pigments, metallic flakes and metallic powders as long as they are provided in an amount that does not materially adversely effect the adhesive bond to the surface. Generally, the adhesive layer is provided at a thickness of 25 to 560 microns. For certain applications, such as applying the multi-layer sheet to a car body, it is often desirable that the adhesive has an initial repositionability so that the sheet can be adjusted to fit at a desired place before a permanent bond is formed. Typically, such repositionability may be achieved by providing a layer of minute glass bubbles on the adhesive surface as disclosed in US 3 331 729.

The multi-layer sheet of the present invention can be obtained by coating a coating composition comprising a polyurethane containing acid groups and a crosslinker on a major side of a polymeric film having a thickness of not more than 150 µm and formed from an ionomer of an olefin-vinyl carboxylic acid copolymer. Prior to coating, the polymeric film is preferably corona-treated or flame-treated or alternatively, one or more primer layers may be provided on the polymeric film to assure good coatability and adherence of the polyurethane layer to the polymeric film.

It is furthermore desirable to coat the polyurethane coating composition from an aqueous dispersion. By the term "aqueous dispersion" is meant that the major part of the fluid phase of the dispersion consists of water. The fluid phase may further contain organic solvents, in particular water miscible solvents. Preferably, the fluid phase of the dispersion will contain at least 60% by weight and more preferably at least 80% by weight of water. The coating composition further typically contains the cross-linker and any other optional compounds such as dye pigments and matting agents. The total amount of solids of the coating composition will typically vary between 25% by weight and 50% by weight. In connection with a preferred embodiment of the present invention, at least 80% by weight and more preferably between 90% by weight and 100% by weight of the solids will be formed by the polyurethane and the cross-linker. The coating composition will generally be applied in an amount sufficient to obtain a dried thickness of 5 to 15 microns.

Any conventional coating technique may be employed for coating the polyurethane coating composition on the polymeric film Examples of useful coating techniques include Meyer bar coating, spray coating, screen printing, rotary screen coating, as well as gravure coating such as direct (forward) gravure coating, reverse gravure coating and offset gravure coating.

Cross-linking of the coated polyurethane coating composition will generally be achieved by heating. Heating may be accomplished by supplying direct heat or indirectly for example by infrared radiation. Typically, the coating is heated to a temperature of 50°C to 140°C, preferably 90°C to 125°C for 20 seconds to 5 minutes and preferably 20 seconds to 60 seconds to obtain a sufficient level of cross-linking of the polyurethane layer.

The opposite side of the polymeric film is coated with an adhesive coating composition to provide an adhesive layer to the polymeric film The adhesive coating composition may be solventless, solvent based or water based. As an alternative to coating, the adhesive layer may be laminated to the polymeric film. The adhesive layer may be provided after coating of the polyurethane coating composition to the polymeric film or prior to coating of the polyurethane coating composition.

The invention is further illustrated by means of the following examples without however the intention to limit the invention thereto.

EXAMPLES

A. Materials used in the examples

Polyurethane prepolymers

Neorez™ R985 - polycarbonate ester based polyurethane available from Avecia (NeoResins), Waalwijk, Netherlands

Neorez™ R960 - polyester based polyurethane from Avecia (NeoResins), Waalwijk, Netherlands

Alberdingk U 600 A - polyether based polyurethane, Alberdingk Boley, Krefeld, Germany

Crosslinking agent

Neocryl™ CX100 - polyfunctional aziridine crosslinker, Avecia (NeoResins), Waalwijk, Netherlands

Siliceous matting agents

ACEMATT™ OK 607 - 2 μm, treated precipitated silica from Degussa Huels AG, Frankfurt am Main, Germany

ACEMATT™ OK 412 - 3 μm, treated precipitated silica from Degussa Huels AG, Frankfurt an Main, Germany

ACEMATT™ OK 520 - 3 μm, treated precipitated silica from Degussa Huels AG, Frankfurt am Main, Germany

ACEMATT™ TS 100 - 4 μm, untreated thermal silica from Degussa Hüls AG, Frankfurt am Main, Germany

Other

Isoversal WL -20449/9177, black pigment paste, 30% pigment content, ISL Chemie, Kuerten, Germany

Colanyl PR 130, black pigment paste, 30 % pigment content from Clariant (Deutschland ) GmbH, Frankfurt, Germany

B. Test Methods

Gloss

Gloss was measured according to DIN (Deutsche Industrie Norm) 67530 using a hand-held gloss meter (available as model micro -TRI-gloss from Byk Gardner Gmbh, Geretsried, Germany. The measurement angle was 60°.

Flagging

This test was designed to determine whether adhesive-coated films were capable of being adhered around door posts or window posts on cars and remaining adhered while being subjected to recovery forces exerted by the backing.

A 2.54 cm wide sample of black, adhesive-coated film prepared according to the method employed in Example 1 was adhered to a aluminum panel having a thickness of ca. 1 mm. The sample had a length of about 8cm The sample was adhered to the aluminum test panel using a rubber-coated roller with hand pressure. About a 1 cm length of the film was allowed to extend past the edge of the aluminum panel. The adhered sample was conditioned at 23°C and 50% relative humidity for 24 hours.

The portion of the film extending past the edge of the panel was trimmed so that 2 mm remained extended. The 2 mm extension was then wrapped around the edge of the aluminum panel so that 1 mm covered the edge (thickness) of the aluminum panel and 1 mm was adhered to the lower (opposite) surface of the test panel. The film on the edge and lower surface of the test panel was rolled down with the rubber coated hand roller as above.

The adhered sample was allowed to rest at 23° C and 50% relative humidity for 24 hours. The sample was then observed for lifting of the adhesive-coated film from the aluminum panel at the edge (flagging) where the 2 mm extension of the film had been wrapped over the edge of the aluminum panel.

Pass =    No lifting after 24 hours
Fail =     Partial or complete lifting of the wrapped portion of the adhesive-coated film

Solvent Resistance

Applied samples of adhesive-coated films were mounted in an American Association of Textile Chemists and Colorists (A.A.T.C.C.) crockmeter, commercially available as Model CM5, from Atlas Electric Devices Co (Chicago, IL, USA). The rub test was done according to A.A.T.C.C. Test Method 8 - 1972.

The three test fluids employed in the test were methyl isobutylketone (MIBK), isopropyl alcohol (IPA) and high octane gasoline, respectively

Samples of the adhesive-coated films having the dimensions 5.1 cm x 12.7 cm (2 in. x 5 in.) having cured polyurethane top-coats were adhered to an aluminum panel and the panel was mounted on the A.A.T.C.C. crockmeter. Cotton wool saturated with the test fluid was used as rub cloth. The sample surface was rubbed with solvent-soaked cotton for 400 cycles with isopropyl alcohol (IPA), 200 cycles with high octane gasoline or 50 cycles with methylisobutylketone (MIBK).

The solvent resistance was rated visually according to the following scale:

4 =    no visible trace after the test
3 =    light trace visible
2 =    substantial amount of surface coating removed
1 =    complete rub through to the polymeric film backing

Abrasion (Crockmeter)

Samples of adhesive-coated films having the dimensions 5.1 cm x 12.7 cm (2 in. x 5 in.) were adhered to a test plate and then mounted in an American Association of Textile Chemists and Colorists (A.A.T.C.C.) crockmeter, commercially available as Model CM5, from Atlas Electric Devices Co (Chicago, IL, USA). The rub test was performed according to A.A.T.C.C. test method 8 - 1972.

Cotton wool was used as the rub cloth. The sample surface was rubbed with the cotton wool pad for a total of 400 cycles.

The abrasion resistance was rated visually according to the following scale:

4 =    no visible trace after the test
3 =    light trace visible
2 =    substantial amount of surface coating removed
1 =    complete rub through to the polymeric film backing

Taber Abrasion

The Taber abrasion test was performed according to ISO DIS 4586-2 using a Taber Abrasion Tester Model 5150, commercially available from Taber Industries (Tonawanda, New York).

In this test, a wheel CS 17 was employed and the test was run for 200 cycles. The load weight was 500 grams. The test results were visually rated according to the following scale:

3 =    light abrasion of the black top-coat visible
2 =    substantial amount of surface coating removed
1 =    complete rub through to the polymeric film backing

Accelerated weathering (Xe)

Samples of adhesive-coated films adhered to an aluminum panel were mounted in a Xenon weatherometer, commercially available from Atlas Electric Devices Co (Chicago, IL, USA). after 24 h conditioning at 23°C and 50% relative humidity. Operation temperature: 65° C, ASTM cycle E 42, each cycle comprising 102 min. light followed by 18 min. light and water spray. The exposure period was 2000 hours.

Pass =    no visible changes after test cycle
Fail =    substantial changes in the gloss characteristics of the surface, color change film cracking, adhesion loss
          and/or lifting from the substrate

Peel adhesion, 180°

Peel adhesion measurements were made according to ASTM D 1000, using a commercially available tensile tester available as Model Z 010 from Zwick GMbH (Ulm, Germany). The jaws of the tensile tester were moved apart at 300 mm/min. The samples adhered on a aluminum panel for peel adhesion were 25.4 mm width. Dwell time was 24 hours at 23°C and 50% relative humidity.

Shrinkage

A sample of the adhesive coated film having a width of 2.54 and length of over 250 mm was adhered to an aluminum test plate having a length of 250 using a rubber-coated roller and hand pressure. The sample was trimmed in length to match the length of the test panel exactly. The adhered sample is stored for 24 hours at 23° C. A length of 200 mm was measured on the adhered film and at each end of the measured length, two small cuts were made in the edge of the film sample at a distance of 200 mm from each other.
The adhered sample was placed in a forced air oven at 120° C for 30 minutes. The sample was then removed and allowed to cool for 2 hours at 23°C. The distance between the two cuts was measured to give a final length in mm and compared to the original length of 200 mm in the following fashion:

$$\text{Shrinkage in \%} = [(200\ mm - \text{final length in mm}) / 200\ mm] \times 100$$

Example 1

A base film was prepared by extruding a 100 μm film comprising a mixture of ethylene-methacrylic acid copolymer, partially neutralized with zinc cations (available as Surlyn™ 1705-1 from Dupont) and a stabilization package. The composition used to extrude the film included an ultra-violet radiation stabilization package similar to that recommended by the polymer resin manufacturer and comprising a pair of ultraviolet radiation absorbers, a hindered amine light stabilizer and an antioxidant.
The mixture was extruded onto an untreated polyester carrier (23 μm Hostaphan ™ available from Mitsubishi Polyester Film GmbH, Wiesbaden, Germany) using conventional extrusion methods. The resulting film had a smoother side (adjacent to the polyester carrier) and a rougher side provided by contacting the extruded polymer melt with a steel casting roll after the extrusion process. After cooling, the film was stripped from the polyester carrier and rolled up.
The film thus prepared was then corona treated on both sides in air atmosphere so that the film had a surface energy of at least 56 dynes /cm$^2$.
The base film was then provided on the rougher side with a 33 g/m$^2$ layer of acrylic pressure-sensitive adhesive (PSA) comprising isooctyl acrylate (IOA), methyl acrylate (MA) and acrylic acid (AA) in the weight ratio of 70 : 22.5 : 7.5 dissolved at 40% solids in ethyl acetate. The adhesive comprised a thermal cross-linker (2-methyl aziridine) in the amount of 3.8 weight % based on 100 parts of dry adhesive. The adhesive was applied to the backing from ethyl acetate solution using a knife-coater and dried in forced air ovens. The PSA layer was protected by a removable, adhesive-repellant release liner comprising a silicone-coated paper.
A coating composition was prepared based on 100 parts of a polycarbonate-based polyurethane prepolymer (available as Neorez R 985 from Avecia NeoResins, Waalwijk, The Netherlands). A cross-linker (available as Neocryl CX 100 from Avecia NeoResins, Waalwijk , Netherlands ) was first added in the amount of 3.5 parts and the mixture stirred for 5 min at 400-800 rpm. Secondly, a black pigment paste (available as Isoversal WL 21 20449-9177 from ISL Chemie, Kuerten, Germany) was added in the amount of 7.70 parts and the mixture was stirred at 5 minutes at 400-800 rpm.
Finally, 1.14 parts by weight of a surfactant SURFYNOL 485 available from Air Products Chemical Division Europe (Utrecht, The Netherlands) was added and stirred for 15 minutes at 400-800 rpm. The finished coating mixture was allowed to rest for 24 hours before coating.

The coating composition thus prepared was then applied to the side of the Surlyn™ base film that bore no adhesive (the smoother side) using a laboratory scale knife-coater at a wet coating weight of 40 µm. The coating composition was then cured by allowing the coated base sheet to stand for 1 minute at 23° C and then by placing it in a forced air oven at 110° C for 60 seconds.

The completed adhesive-coated, black protective film was then tested according to the procedures outlined above under TEST METHODS. This example represents a film with no matting agent in the polyurethane-based top-coat, thus corresponding to a black film with high gloss.

The chemical composition of the top-coat and overall construction of the adhesive coated sheet is summarized in Table 1.

The 180° peel adhesion of the adhesive-coated film was measured to be 35.8 N/2.54cm Other properties of the adhesive-coated, black protective film are shown in Table 2.

Example 2-3

Examples 2 and 3 were prepared in a manner similar to that of Example 1, with the exception that the chemical nature of the polyurethane prepolymer in the black coating composition was changed. Instead of a polycarbonate-based polyurethane, polyurethane based on a polyether and a polyester, respectively, were employed as summarized in Table 1.

Examples 4-6

Example 1 was repeated with the exception that the surfactant was omitted and various amounts of fumed silica were added to Examples 4-6, respectively, to make films having a black matt appearance. Fumed silica (ACEMATT™ OK 412 from Degussa-Huls AG, Frankfurt, Germany) was added in the amounts of 2.5, 4.0 and 8.0 weight %.

Specifically, 100 parts of Neorez was taken and mixed first with the fumed silica. The mixture was stirred at 2000 rpm for ca. 4 min. Secondly, the crosslinker was added and then the pigment paste. This mixture was stirred for 10 minutes at 200 rpm.

Examples 7-9

Examples 4-6 were repeated with the exception that a second silica matting agent was employed. Compositions are summarized in Table 1 and test results in Table 2.

Examples 10-12

Examples 4-6 were repeated with the exception that a third silica matting agent was employed. Compositions are summarized in Table 1 and test results in Table 2.

Examples 13-14

Examples 13 and 14 were prepared in a manner similar to Example 5, with the exception that the chemical nature of the polyurethane prepolymer in the black coating composition was changed. Instead of a polycarbonate-based polyurethane, polyurethane based on a polyether and a polyester, respectively, were employed as summarized in Table 1.

Comparative Examples 1-3

The polycarbonate-based polyurethane coating composition of Example 3 comprising 4.0 wt % silica was applied onto four other polymeric film backings having approximately the same thickness of the Surlyn™ film of Examples 1- 10. The polymeric films used as a backing in Comparative Examples 1-3 were polypropylene (PP), low density polyethylene (LDPE), and polyethyleneterphthalate (PET), respectively.

Test results are summarized in Table 2. Comparative Examples 1-3 failed the flagging test.

Comparative Example 4

Comparative Example 4 was prepared in a manner similar to Example 5 with the exception that the polymeric film backing was 250 µm thick rather than 100 µm. The adhesive-coated film failed the flagging test as shown in Table 2.

Table 1

| Ex. | Resin Type | Resin tradename | Fumed silica, tradename | Fumed silica amount, wt. % | Backing type | Backing thickness, µm |
|---|---|---|---|---|---|---|
| 1 | PCARB | Neorez R 985 | -- | 0 | Surlyn™ | 100 |
| 2 | PETH | Alberdingk U600A | -- | 0 | Surlyn™ | 100 |
| 3 | PEST | Neorez R 960 | -- | 0 | Surlyn™ | 100 |
| 4 | PCARB | Neorez R 985 | OK 412 | 2.5 | Surlyn™ | 100 |
| 5 | PCARB | Neorez R 985 | OK 412 | 4.0 | Surlyn™ | 100 |
| 6 | PCARB | Neorez R 985 | OK 412 | 8.0 | Surlyn™ | 100 |
| 7 | PCARB | Neorez R 985 | OK 520 | 2.5 | Surlyn™ | 100 |
| 8 | PCARB | Neorez R 985 | OK 520 | 4.0 | Surlyn™ | 100 |
| 9 | PCARB | Neorez R 985 | OK 520 | 8.0 | Surlyn™ | 100 |
| 10 | PCARB | Neorez R 985 | TS 100 | 2.5 | Surlyn™ | 100 |
| 11 | PCARB | Neorez R 985 | TS 100 | 4.0 | Surlyn™ | 100 |
| 12 | PCARB | Neorez R 985 | TS 100 | 8.0 | Surlyn™ | 100 |
| 13 | PETH | Alberdingk U600A | OK 412 | 4.0 | Surlyn™ | 100 |
| 14 | PEST | Neorez R 960 | OK 412 | 4.0 | Surlyn™ | 100 |
| C1 | PCARB | Neorez R 985 | OK 412 | 4.0 | PP | 115 |
| C2 | PCARB | Neorez R 985 | OK 412 | 4.0 | LDPE | 100 |
| C3 | PCARB | Neorez R 985 | OK 412 | 4.0 | PET | 100 |
| C4 | PCARB | Neorez R 985 | OK 412 | 4.0 | Surlyn™ | 250 |

Table 2

| Ex. | Gloss | Flagg ing | Aging (Xe) | Solvent Resistance | | | Abrasion (Crockm eter) | Taber abrasion | Shrink., % |
|---|---|---|---|---|---|---|---|---|---|
| | | | | IPA | Gasoline | MIBK | Cotton | | |
| 1 | 95.1 | P | P | 4 | 4 | 4 | 3 | 3 | 0.30 |
| 2 | 93.2 | -- | -- | 1 | 1 | -- | 1 | -- | -- |
| 3 | 101.9 | -- | -- | 2 | 4 | -- | 2 | -- | -- |
| 4 | 28.4 | P | P | 3 | 3 | 4 | 4 | 3 | 0.30 |
| 5 | 17.3 | P | P | 4 | 3 | 4 | 4 | 3 | 0.18 |
| 6 | 6.9 | -- | P | 4 | 3 | 4 | 4 | 3 | 0.33 |
| 7 | 36.4 | -- | -- | -- | -- | 3 | -- | -- | -- |
| 8 | 21.1 | P | -- | 3 | 3 | 3 | 4 | 3 | 0.38 |
| 9 | 8.5 | -- | -- | -- | -- | -- | -- | -- | -- |
| 10 | 28.5 | -- | -- | -- | -- | -- | -- | -- | -- |
| 11 | 17.3 | P | -- | 3 | 3 | 3 | 4 | 3 | 0.38 |
| 12 | 7.5 | -- | -- | -- | -- | -- | -- | -- | -- |

Table 2 (continued)

| Ex. | Gloss | Flagg ing | Aging (Xe) | Solvent Resistance | | | Abrasion (Crockm eter) | Taber abrasion | Shrink., % |
|-----|-------|-----------|------------|------|----------|------|--------|------|------|
| | | | | IPA | Gasoline | MIBK | Cotton | | |
| 13 | 18.3 | P | -- | 2 | 1 | 3 | 3 | 3 | 0.05 |
| 14 | 28.1 | P | -- | 1 | 2 | 3 | 3 | 3 | 0.25 |
| C1 | 21.6 | F | -- | -- | -- | 3 | -- | 2 | 0.10 |
| C2 | 22.9 | F* | -- | -- | -- | 3 | -- | 2 | 0.25 |
| C3 | 21.0 | F | -- | -- | -- | 3 | -- | 1 | 0.05 |
| C4 | -- | F | -- | 4 | 3 | -- | -- | -- | -- |

-- not measured
\* failure between the film and adhesive

**Claims**

1. Multi-layer sheet comprising (i) a polymeric film having a thickness of not more than 150µm and formed from an ionomer of an olefin-vinyl carboxylic acid copolymer, (ii) on a first side of said polymeric film a cross-linked polyurethane layer comprising the crosslinking reaction product of a polyurethane containing acid groups and a crosslinker and (iii) on a second side of said polymeric film opposite to said first side, an adhesive layer.

2. Multi-layer sheet according to claim 1 wherein said polyurethane having acid groups comprises a polycarbonate based polyurethane comprising the reaction product of a polycarbonate polyol or a polycarbonate polyamine and an aliphatic polyisocyanate.

3. Multi-layer sheet according to claim 1 wherein the cross-linked polyurethane layer comprises a matting agent having an average particle size of not more than 10 µm.

4. Multi-layer sheet according to claim 3 wherein said matting agent comprises silica matting agent.

5. Multi-layer sheet according to any of claims 1 to 4 wherein said polymeric film is formed from an ionomer of an ethylene/acrylic acid copolymer or an ethylene/methacrylic acid copolymer.

6. Multi-layer sheet according to any of the previous claims wherein said adhesive layer comprises a normally tacky pressure sensitive adhesive layer.

7. Multi-layer sheet according to any of the previous claims wherein said cross-linker is a polyfunctional aziridine.

8. Multi-layer sheet according to any of the previous claims wherein said polyurethane having acid groups has an acid number of at least 15mg KOH/g.

9. A motor vehicle having attached to a door post or window post a multi-layer sheet as defined in any of claims 1 to 8.

10. Method of making a multi-layer sheet comprising the steps of:

    (a) providing a polymeric film having a thickness of not more than 150µm and formed from an ionomer of an olefin-vinyl carboxylic acid copolymer;
    (b) applying to a first side of said polymeric film a composition comprising a polyurethane containing acid groups and a crosslinker;
    (c) applying to a second side of said polymeric film opposite to said first side, an adhesive layer; and
    (d) causing cross-linking of the polyurethane layer.

11. Method according to claim 10 wherein said composition comprising said polyurethane further comprises a matting agent having an average particle size of not more than µm.

**12.** Method according to any of claims 10 or 11 wherein said composition comprising said polyurethane is aqueous borne.

**Patentansprüche**

**1.** Mehrschichtige Folie, umfassend (i) eine Polymerfolie mit einer Dicke von nicht mehr als 150 μm, gebildet aus einem Ionomer eines Olefin-Vinylcarbonsäure-Copolymers, (ii) auf einer ersten Seite der Polymerfolie eine vernetzte Polyurethanschicht, umfassend das Produkt der Vernetzungsreaktion von einem säuregruppenhaltigen Polyurethan und einem Vernetzer und (iii) auf einer zweiten Seite der Polymerfolie, die der ersten Seite gegenüberliegt, eine Klebstoffschicht.

**2.** Mehrschichtige Folie nach Anspruch 1, wobei das Säuregruppen aufweisende Polyurethan ein auf Polycarbonat basierendes Polyurethan, umfassend das Reaktionsprodukt eines Polycarbonatpolyols oder eines Polycarbonatpolyamins und eines aliphatischen Polyisocyanats, umfasst.

**3.** Mehrschichtige Folie nach Anspruch 1, wobei die vernetzte Polyurethanschicht ein Mattierungsmittel mit einer durchschnittlichen Partikelgröße von nicht mehr als 10 μm umfasst.

**4.** Mehrschichtige Folie nach Anspruch 3, wobei das Mattierungsmittel ein Siliciumdioxid-Mattierungsmittel umfasst.

**5.** Mehrschichtige Folie nach einem der Ansprüche 1 bis 4, wobei die Polymerfolie aus einem Ionomer eines Ethylen/Acrylsäure-Copolymers oder eines Ethylen/Methacrylsäure-Copolymers gebildet wird.

**6.** Mehrschichtige Folie nach einem der vorhergehenden Ansprüche, wobei die Klebstoffschicht eine normalerweise klebrige Haftklebstoffschicht umfasst.

**7.** Mehrschichtige Folie nach einem der vorhergehenden Ansprüche, wobei der Vernetzer ein polyfunktionelles Aziridin ist.

**8.** Mehrschichtige Folie nach einem der vorhergehenden Ansprüche, wobei das Säuregruppen aufweisende Polyurethan eine Säurezahl von wenigstens 15 mg KOH/g aufweist.

**9.** Kraftfahrzeug, bei dem an einer Tür- oder Fensterstrebe eine, wie in einem der Ansprüche 1 bis 8 definierte, mehrschichtige Folie befestigt ist.

**10.** Verfahren zur Herstellung einer mehrschichtigen Folie, umfassend die Schritte:

(a) Bereitstellen einer Polymerfolie mit einer Dicke von nicht mehr als 150 μm, gebildet aus einem Ionomer eines Olefin-Vinylcarbonsäure-Copolymers;
(b) Auftragen einer Zusammensetzung, umfassend ein säuregruppenhaltiges Polyurethan und einen Vernetzer, auf eine erste Seite der Polymerfolie;
(c) Auftragen einer Klebstoffschicht auf eine zweite Seite der Polymerfolie, die der ersten Seite gegenüberliegt, und
(d) Bewirken der Vernetzung der Polyurethanschicht.

**11.** Verfahren nach Anspruch 10, wobei die das Polyurethan umfassende Zusammensetzung weiterhin ein Mattierungsmittel mit einer durchschnittlichen Partikelgröße von nicht mehr als 10 μm umfasst.

**12.** Verfahren nach einem der Ansprüche 10 oder 11, wobei die das Polyurethan umfassende Zusammensetzung auf wässriger Basis ist.

**Revendications**

**1.** Feuille multicouche comprenant (i) un film polymère ayant une épaisseur non supérieure à 150 μm et formée d'un ionomère d'un copolymère oléfine-acide vinylcarboxylique, (ii) sur un premier côté dudit film polymère une couche de polyuréthane réticulé comprenant le produit de la réaction de réticulation d'un polyuréthane contenant des groupes acides et d'un agent de réticulation et (iii) sur un second côté dudit film polymère, à l'opposé dudit premier côté, une couche d'adhésif.

2.   Feuille multicouche selon la revendication 1 dans laquelle ledit polyuréthane comportant des groupes acides comprend un polyuréthane à base de polycarbonate constitué du produit de la réaction d'un polycarbonate-polyol ou d'une polycarbonate-polyamine et d'un polyisocyanate aliphatique.

3.   Feuille multicouche selon la revendication 1 dans laquelle la couche de polyuréthane réticulé comprend un agent de matité ayant une granulométrie moyenne non supérieure à 10 µm.

4.   Feuille multicouche selon la revendication 3 dans laquelle ledit agent de matité comprend un agent de matité de type silice.

5.   Feuille multicouche selon l'une quelconque des revendications 1 à 4 dans laquelle ledit film polymère est formé d'un ionomère d'un copolymère éthylène/acide acrylique ou d'un copolymère éthylène/acide méthacrylique.

6.   Feuille multicouche selon l'une quelconque des revendications précédentes dans laquelle ladite couche d'adhésif comprend une couche d'adhésif sensible à la pression normalement collante.

7.   Feuille multicouche selon l'une quelconque des revendications précédentes dans laquelle ledit agent de réticulation est une aziridine polyfonctionnelle.

8.   Feuille multicouche selon l'une quelconque des revendications précédentes dans laquelle ledit polyuréthane comportant des groupes acides possède un indice d'acide d'au moins 15 mg de KOH/g.

9.   Véhicule à moteur comportant, fixé à un montant de portière ou à un montant de glace une feuille multicouche telle que définie dans l'une quelconque des revendications 1 à 8.

10.   Procédé de fabrication d'une feuille multicouche comprenant les étapes consistant à :

(a) se procurer un film polymère ayant une épaisseur non supérieure à 150 µm et formé d'un ionomère d'un copolymère oléfine-acide vinylcarboxylique ;
b) appliquer sur un premier côté dudit film polymère une composition comprenant un polyuréthane contenant des groupes acides et un agent de réticulation ;
(c) appliquer sur un second côté dudit film polymère, à l'opposé dudit premier côté, une couche d'adhésif ; et
(d) provoquer la réticulation de la couche de polyuréthane.

11.   Procédé selon la revendication 10 dans lequel ladite composition comprenant ledit polyuréthane comprend en outre un agent de matité ayant une granulométrie moyenne non supérieure à 10 µm.

12.   Procédé selon l'une quelconque des revendications 10 ou 11 dans lequel ladite composition comprenant ledit polyuréthane est à base d'eau.